# EUROPEAN PATENT APPLICATION

(11) **EP 0 866 406 A1**
(43) Date of publication of application: **23.09.1998**
(21) Application number: 97410036.4
(22) Date of filing: 19.03.1997
(51) Int. Cl.: G06F 15/16, G06F 9/46, G06F 5/06

(54) **Notification of message arrival in a parallel computer system**

(71) Applicant: Institute of Computer Science ( FORTH), 711-10 Heraklio (Crete) (GR)
(72) Inventor: Markatos, Evangelos, c/o ICS-FORTH, Vassilika Vouton, 711 10 Heraklion Crete (GR); Katevenis, Manolis, c/o ICS-FORTH, Vassilika Vouton, 711 10 Heraklion Crete (GR); Vatsolaki, Penny, c/o ICS-FORTH, Vassilika Vouton, 711 10 Heraklion Crete (GR)
(74) Representative: de Beaumont, Michel

(57) **Abstract**

The invention relates to a parallel computer system comprising several processors (CPU) connected together through a network (10), each local processor having a local memory (MEM) in which remote processors are likely to write data and notifications for indicating the presence of the data to the local processor, the notifications being enqueued in a notification buffer for subsequent retrieval by the local processor. Each processor is associated with local hardware in charge of recognizing an incoming notification and performing the operations necessary for enqueueing this notification in the buffer.

## Description

The present invention relates to parallel and distributed computer systems which are intended to process a single task by several parallel operating processors. The invention more particularly relates to the notification of message arrival which is necessary for the communication between the processors.

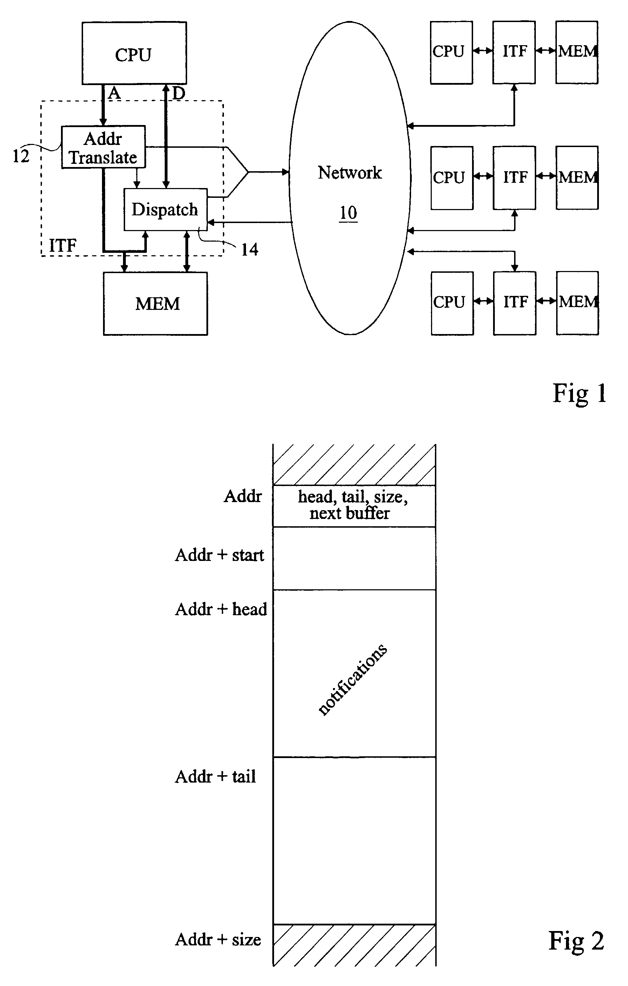

Figure 1 schematically shows a conventional parallel computer system, such as described in the technical report FORTH-ICS/TR-123, May 1994, "Telegraphos: High Speed Communication Architecture for Parallel and Distributed Computer Systems", by Manolis Katevenis, and published on Internet at ftp.ics.forth.gr. This architecture is of the known shared memory access type, which means that each processor has a local memory which may be shared between all the processors of the system.

In figure 1, each processor CPU is connected to a local memory MEM and to a network 10 through an interface ITF. Each interface ITF comprises an address translation unit 12 which receives the addresses A provided by the corresponding processor. All the memories of the system are accessible in a shared address space. The role of the address translation unit 12 is to send the address issued by the processor to the local memory MEM or to send this address to the adequate remote memory through the network 10, depending on the value of the address.

A dispatch unit 14 is intended to exchange data between the processor, the memory and the network. If the address issued by the processor corresponds to the local memory, the dispatch unit 14 exchanges (reads or writes) data between the processor and its local memory. If the address corresponds to a remote memory, the address is sent on the network in the form of a network read or write request, in order to exchange data with the corresponding remote memory. A network request is in the form of a packet containing at least an address, control bits identifying the request type, and data for a write request.

When a dispatch unit 14 receives a network read request, it directly reads the local memory, bypassing the processor, and sends the read data to the demanding remote processor in a network packet. When receiving a network write request, the dispatch unit 14 directly writes in the local memory the received data at the received address, without interrupting the processor. This is a so-called remote-write operation.

Usually, a first processor writes specific data in the memory of a second remote processor (remote-write) when the second processor needs this specific data to continue its task. The second processor must be notified of the arrival of the specific data. Therefore, a remote-write is usually followed by a notification for indicating to the remote processor the address at which it will find the expected data. One processor will usually receive many notifications from other processors and will not be able to handle them in real time. Therefore, the notifications must be stored so that the processor may read them in order to handle them one after the other.

In the Cray T3D system, the notifications for a processor are stored in a buffer allocated in the local memory of the processor, and the tail of the buffer, i.e. the first free location for a notification, is contained in a so-called fetch-and-increment register. In order to send a notification, a processor first remote-reads the content of the fetch-and-increment register and then remote-writes the notification at the address provided by the fetch-and-increment register. The more reading of the fetch-and-increment register causes it to increment its content and point to the next free location for a notification.

A drawback of this mechanism is that it needs the transmission of three network packets to achieve a notification. One packet is needed for sending a read request to the fetch-and-increment register, a second packet is needed to send back the content of the fetch-and-increment register, and a last packet is needed to write the notification. This substantially slows down the communication between processors.

Moreover, the size of the notification buffer is determined by the fetch-and-increment register and may not be increased.

An object of the present invention is to provide a particularly fast notification mechanism.

Another object of the invention is to provide a notification storage whose capacity may vary and become, if necessary, as large as that of the local memory.

These objects are achieved by a parallel computer system comprising several processors connected together through a network, each local processor having a local memory in which remote processors are likely to write data and notifications for indicating the presence of the data to the local processor, the notifications being enqueued in a notification buffer for subsequent retrieval by the local processor. Each processor is associated with local hardware in charge of recognizing an incoming notification and performing the operations necessary for enqueueing this notification in the buffer.

According to an embodiment of the invention, said notification buffer is allocated in the local memory at a predetermined address at which are available the head and the tail of a list of pending notifications, and the size of the buffer, said hardware being operative to write an incoming notification at the tail of the list and increment the tail by one modulo the size of the notification buffer.

According to an embodiment of the invention, the head and the tail are values relative to the address of the notification buffer, which address is a power of two and a multiple of the size of the buffer.

According to an embodiment of the invention, the head, the tail and the size are half-words of the buffer.

According to an embodiment of the invention, said hardware is operative to cause refusal of notifications and to generate an interruption of the local processor when the tail equals the head, the local processor being programmed to handle the interruption by allocating an n^{th} notification buffer, empty the first notification buffer into the n^{th} notification buffer, insert in the n^{th}-1 notification buffer the address of the n^{th} notification buffer, and cause acceptance of notifications again.

According to an embodiment of the invention, the local processor is programmed to regularly read the notification at the head of the list and increment the head by one modulo the size of the buffer.

According to an embodiment of the invention, the local processor is programmed to regularly read the notification at the head of the list of an i^{th} notification buffer whose address is accessible in the first notification buffer, increment the head in the i^{th} buffer by one modulo the size, and, if the head then equals the tail, disassemble the i^{th} notification buffer and insert in the first notification buffer the address of the i^{th}+1 notification buffer, if it exists.

These objects, features and advantages, as well as others, of the present invention will be discussed in detail in the following description of specific embodiments, taken in conjunction with the following drawings, but not limited by them.
Figure 1, previously described, schematically shows a conventional parallel computer architecture;
figure 2 shows an exemplary notification buffer according to the invention;
figure 3 shows a flowchart illustrating the operation of hardware according to the invention for controlling the buffer of figure 2;
figure 4A shows exemplary hardware for carrying out the operations of figure 3; and
figure 4B shows an alternative advantageous embodiment of a portion of the hardware of figure 4A.

In order to make message arrival notifications more efficient in a parallel computer system, one aspect of the present invention is to let the receiving computer perform the task of enqeueing notifications, instead of conventionally letting the sending computer perform this task. In other words, the sender will issue a notification as a single network packet in a specific format recognizable by the receiver which will perform the necessary operations for enqueueing the notification locally. To not interrupt the receiving processor, its network interface comprises a specific hardware which performs the necessary operations for enqueueing the incoming notification in a buffer.

Figure 2 schematically shows the structure of an exemplary buffer usable according to the invention for enqueueing notifications. The buffer is allocated in the local memory at an address *Addr*. In a header of the buffer, at address *Addr*, the buffer stores the head of the notification list (where the processor should read the next notification), the tail of the list (where the next incoming notification is to be written), the size of the buffer, and eventually the address of a next buffer. The head and tail values are relative to the address of the buffer, i.e. the addresses of the head and the tail of the list are obtained, respectively, by adding the head value and the tail value to the address *Addr* of the buffer.

Since the header of the buffer may occupy several words, the first useful location of the buffer is found at address *Addr* + *start*, where *start* is the size of the header.

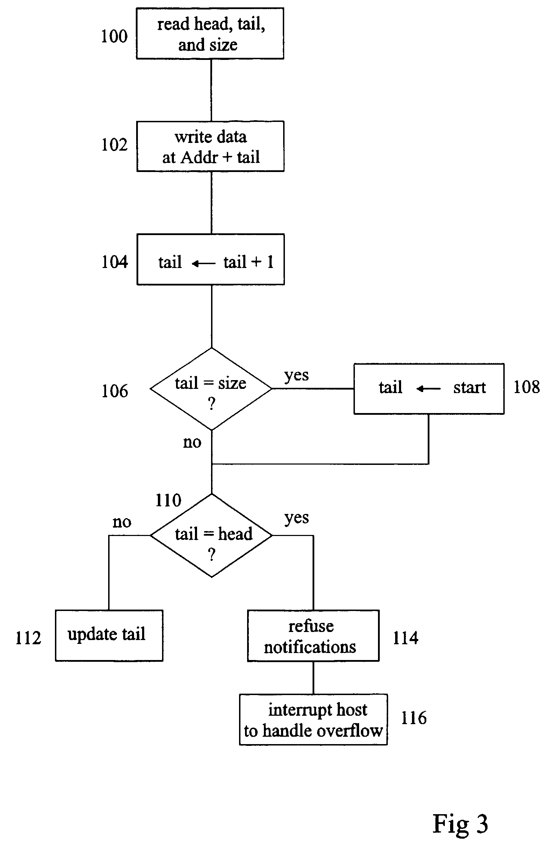

Figure 3 shows a flowchart illustrating the operation of hardware according to the invention in charge of locally enqueueing notifications in a buffer such as that of figure 2. As soon as a network packet containing a notification arrives at the network interface of a processor, the enqueue hardware recognizes the packet, for example through a specific packet identifier, and stores the data contained in the packet in a register. The data in a notification is usually the address at which the processor will find other data that was previously written in its local memory by remote-write operations.

At 100, the enqueue hardware reads the head, the tail and the size contained at address *Addr* of the buffer. At 102, the data in the notification is written at address *Addr* + *tail*, which is the first free location at the end of a list of previously stored notifications.

At 104, the tail is incremented by 1. At 106, it is checked whether the tail is equal to the size of the buffer. If yes, the end of the buffer is reached and the location for the next notification is at the beginning of the buffer. Therefore, at 108, the tail is affected with value *start*. In fact, the buffer is filled-in circularly.

At 110, whether the tail was equal to the size or not, it is checked whether the tail is equal to the head. If not, everything is normal and the new tail value is updated in the header of the buffer at 112.

If the tail is equal to the head, the buffer is full and no more notifications may be enqueued. At 114, the network interface is set to refuse any further notification. This may be achieved as follows in an exemplary system supporting reliable message delivery using acknowledgement "tickets" for received messages. An upstream network switch sends a message to a downstream switch only if it has received a "ticket" from the downstream switch. Each message transmitted consumes one ticket. A downstream switch may prevent an upstream switch from sending more messages, just by stopping the upstream sending of tickets. Thus, the arrival of further notifications may be stopped, just by not sending back the acknowledgement ticket for the last arrived notification. The upstream neighboring switches, not receiving a ticket, will not transmit another message, including a notification message.

At this point, the hardware could be designed to wait for the full-condition at 110 to disappear and then set the network interface to accept notifications again.

However, in a more advantageous embodiment, at 116, the local processor is interrupted to execute a routine to handle the full condition of the buffer. This routine is programmed so that it transfers the whole content of the buffer into a second buffer. The address of the second buffer is inserted at the *next buffer* location of the first buffer and the values of the head and the tail of the first buffer are set to *start*. The first buffer then being empty, the network interface is set to accept notifications again.

With this mechanism, if the first buffer overflows a certain number of times, a linked series of buffers is created, containing the previous contents of the first buffer. When the content of the first buffer is transferred to an n^{th} buffer, the address of the n^{th} buffer is not inserted in the header of the first buffer, but in the header of the n^{th}-1 buffer. In proceeding this way, the first buffer always points to the buffer containing the oldest notifications which should be handled first by the processor.

The way the notifications are read out from the first buffer when there is no linked series is conventional. The processor is programmed to regularly read the head in the buffer, to read the notification contained at *Addr* + *head*, to increment the head (modulo the size of the buffer, like the tail), and finally to write back the updated head. These operations should be atomic, i.e. carried out without the possibility of being interrupted. When using an Alpha processor, this can be done by running the corresponding code in so-called PAL mode (Privileged Architecture Library).

In the presence of a linked series of buffers the processor starts by reading the *next buffer* location, always in the first buffer. This location first points at a buffer i, for example. The processor then directly achieves the above-described operations on buffer i. When the notifications of buffer i have all been handled (its head is equal to its tail), buffer i is disassembled, and the pointer (i+1) which was held in its *next buffer* location is copied into the *next buffer* location of buffer 1. Therefore, the next notifications that will be handled by the processor are those of buffer i+1 containing the next oldest notifications.

By thus creating a linked series of buffers, the list of notifications may grow as large as the local memory. The overhead in handling such a series of linked buffers is only one read cycle of the *next buffer* location in the first buffer. Of course, when the contents of a linked buffer had been handled, additional operations are performed to disassemble the buffer and update the *next buffer* location in the first buffer, but these operations are achieved only once for each linked buffer.

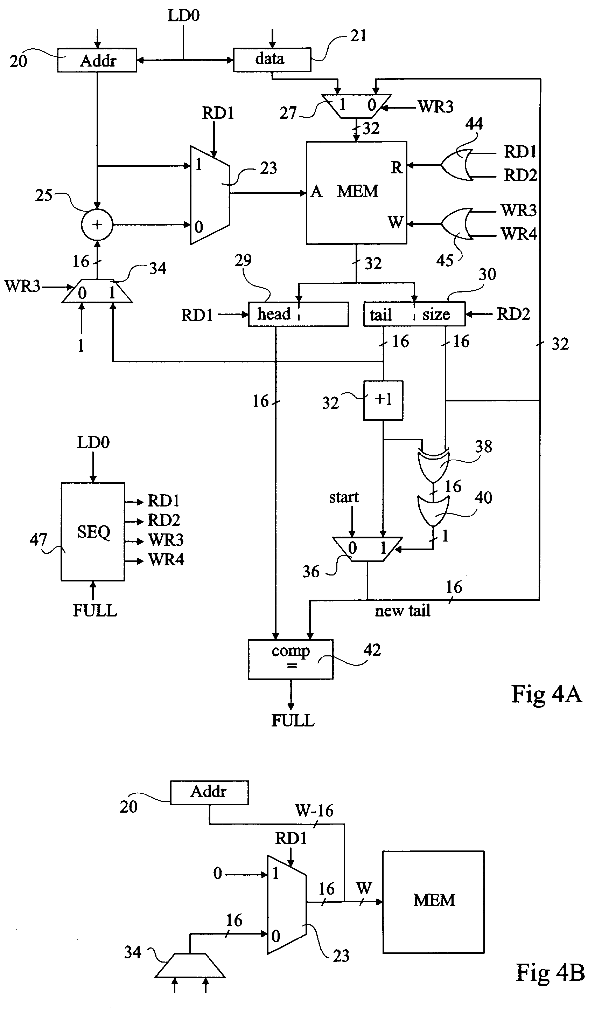

Figure 4A schematically snows exemplary hardware for carrying out the operations described in relation with figure 3. Two registers 20 and 21 respectively receive, upon the assertion of a load signal LD0, the address *Addr* of the local notification buffer and the data corresponding to the notification. The address contained in register 20 is provided to a first input of a multiplexer 23 and to a first input of an adder 25 whose output is provided to a second input of multiplexer 23. The output of multiplexer 23 is provided as an address for the local memory MEM and corresponds to the output of adder 25 when a read signal RD1 is asserted, otherwise the multiplexer selects the address in register 20.

The data contained in register 21 is provided to a first input of a multiplexer 27 whose output provides data for storage in memory MEM. When a write signal WR3 is asserted, multiplexer 27 selects the data in register 21, otherwise it selects information, described later, provided to a second input of the multiplexer.

In a practical example which will be considered hereafter, the words of memory MEM, and thus of the notification buffer, are 32 bits wide, and the head, tail, and size values of the buffer are half-words of 16 bits. In this case, the tail and the size, for example, are stored in a single word. A second word stores the head and eventually a copy of the tail. Two registers 29 and 30 are connected to the output of the memory such that register 29 receives the head when read signal RD1 is asserted, and register 30 receives the size and the tail when a read signal RD2 is asserted.

The tail contained in register 30 is provided to an increment-by-one circuit 32 and to a first input of a multiplexer 34 whose output is provided to the second input of adder 25. A second input of multiplexer 34 receives value 1 which is selected when write signal WR3 is asserted, otherwise multiplexer 34 selects the tail contained in register 30.

The output of the increment circuit 32 is provided to a first input of a multiplexer 36 and to a first input of a bit-to-bit exclusive OR gate 38. The second input of the exclusive OR gate 38 receives the size value from register 30. The 16 bits output by gate 38 are provided to an OR gate 40 whose single bit output controls the selection of multiplexer 36. The second input of multiplexer 36 receives the value *start*, which points at the first useful location of the buffer. When the output of OR gate 40 is zero, which means that the value *tail* + 1 (the output of circuit 32) and the value *size* are equal, multiplexer 36 selects value *start* as the new tail value, otherwise it selects the output *tail* + 1 of circuit 32.

The new tail value provided by multiplexer 36 arrives at the first input of a comparator 42 and. The new tail and the size from register 30 are concatenated and provided to the second input of multiplexer 27. The second input of comparator 42 receives the head from register 29 and provides a buffer-full signal when the new tail is equal to the head. This buffer-full signal, when asserted, causes the network interface to refuse further notifications.

The read signals RD1 and RD2 are provided to a read control input R of the memory through an OR gate 44. Write signal WR3 is provided, with an additional write signal WR4, to a write control input W of the memory through an OR gate 45.

A sequencer 47 is designed to successively provide the read and write signals RD1, RD2, WR3 and WR4 after it receives the load signal LD0. Load signal LD0 is provided by the network interface upon recognition of an arriving notification.

When a notification arrives in a network packet, the network interface will recognize it, for example by a specific combination of identification bits set by the sender of the notification. The notification contains the address *Addr* of the buffer and data which is usually an address at which the receiving processor will find previously written messages. The address and the data are loaded respectively into registers 20 and 21 by asserting signal LD0. The addresses *Addr* of all the notification buffers of the system are provided to the various computers, for example, by the operating system.

At the next memory cycle, the read signal RD1 is asserted causing a read cycle of the memory. The address then presented to the memory by multiplexer 23 is the address *Addr* contained in register 20. Register 29, also enabled by signal RD1, then receives from the memory the head contained in the first location of the buffer.

The next memory cycle is a read cycle caused by the assertion of signal RD2. The address then provided to the memory by multiplexer 23 is the output of adder 25. Adder 25 receives the address *Addr* and the value 1 selected by multiplexer 34, and thus provides the address of the second location of the buffer which contains the tail and the size. Register 30, also enabled by signal RD2, loads the tail and the size then provided by the memory.

As soon as the tail and the size are loaded into register 30, a new tail value is calculated. First, the tail is incremented by 1 by circuit 32 and then compared to the size by gates 38 and 40. If *tail* + 1 = *size*, multiplexer 36 will select the value *start* (i.e. the first useful location of the buffer) as the new tail, otherwise it selects the valu*e tail* + 1 provided by circuit 32. The new tail value is compared to the head by comparator 42 which will assert the full-buffer signal if the new tail is equal to the head.

The next memory cycle is a write cycle caused by the assertion of signal WR3. The data presented at the input of the memory is then the data contained in register 21, i.e. the notification. The address is still the output of adder 25 which now receives the address *Addr* and, through multiplexer 34, the tail contained in register 30. The notification is thus written at the end of the list of previously stored notifications.

The next memory cycle is a write cycle caused by the assertion of signal WR4. The data then selected by multiplexer 27 for writing into the memory is the new tail value provided by multiplexer 26 and the size contained in register 30. Since the tail, which must be updated, is only a half-word, the size, although it does not change, is written back with the tail to form a whole word. The address at which the tail and the size are written is, of course, the same as that where they are read, i.e. *Addr* + 1, provided through multiplexer 23, adder 25 and multiplexer 34.

As previously explained, the assertion of the full signal will cause the network interface to refuse further notifications.

In case one wants to use a linked list of buffers, this full signal will additionally cause an interruption of the processor for copying the buffer into a second buffer, as previously explained.

If only one buffer is used (and not a series of linked buffers), the network interface will refuse notifications until space is freed in the buffer. For this purpose, sequencer 47 may be designed such that, while the full signal remains asserted, it only causes the assertion of signals RD1 and RD2 when a subsequent notification is received, in order to reload registers 29 and 30 with the head and tail values. If the processor has had time before the arrival of this subsequent notification to handle stored notifications and update the head, comparator 42 will disable the full signal. If this happens, sequencer 47 will continue its normal operation by successively asserting the remaining signals WR3 and WR4. Otherwise the full signal remains asserted, causing the refusal of the notification.

The addresses to provide to the memory may be relatively wide, for example of w=32 bits or more. In that case, one of the largest elements of figure 4A is adder 25. In order to reduce the surface area of the hardware, the addresses chosen for the buffers are advantageously powers of 2 and multiples of the size of the buffers. In that case, as shown in figure 4B in the example of a 16-bit size value, at least the 16 least significant bits of the address of the buffer are zero. Then, only the remaining w-16 most significant bits of address *Addr* are stored in register 20 and directly provided as the most significant bits of the address of the memory. The 16 least significant bits of the address will be provided by multiplexer 23 which receives, at its first input, value zero instead of the content of register 20, and, at its second input, directly the output of multiplexer 34. Multiplexer 23 is then just a series of 16 two-input AND gates, wherein each AND gate receives the read signal RD1 and a respective bit from multiplexer 34.

## Claims

1. A parallel computer system comprising several processors (CPU) connected together through a network (10), each local processor having a local memory (MEM) in which remote processors are likely to write data and notifications for indicating the presence of the data to the local processor, the notifications being enqueued in a notification buffer for subsequent retrieval by the local processor, characterized in that each processor is associated with local hardware in charge of recognizing an incoming notification and performing the operations necessary for enqueueing this notification in the buffer.

2. The parallel computer system according to claim 1, characterized in that said notification buffer is allocated in the local memory at a predetermined address (Addr) at which are available the head and the tail of a list of pending notifications, and the size of the buffer, said hardware being operative to write an incoming notification at the tail of the list and increment the tail by one modulo the size of the notification buffer.

3. The parallel computer system according to claim 2, characterized in that the head and the tail are values relative to the address (Addr) of the notification buffer, which address is a power of two and a multiple of the size of the buffer.

4. The parallel computer system according to claim 3, characterized in that the head, the tail and the size are half-words of the buffer.

5. The parallel computer system according to claim 2, characterized in that said hardware is operative to cause refusal of notifications and to generate an interruption of the local processor when the tail equals the head, the local processor being programmed to handle the interruption by allocating an n^{th} notification buffer, empty the first notification buffer into the n^{th} notification buffer, insert in the n^{th}-1 notification buffer the address of the n^{th} notification buffer, and cause acceptance of notifications again.

6. The parallel computer system according to claim 2, characterized in that the local processor is programmed to regularly read the notification at the head of the list and increment the head by one modulo the size of the buffer.

7. The parallel computer system according to claim 5, characterized in that the local processor is programmed to regularly read the notification at the head of the list of an i^{th} notification buffer whose address is accessible in the first notification buffer, increment the head in the i^{th} buffer by one modulo the size, and, if the head then equals the tail, disassemble the i^{th} notification buffer and insert in the first notification buffer the address of the i^{th}+1 notification buffer, if it exists.
